# EUROPÄISCHE PATENTSCHRIFT

(11) **EP 3 172 099 B1**
(45) Veröffentlichungstag und Bekanntmachung des Hinweises auf die Patenterteilung: **27.02.2019**
(21) Anmeldenummer: 15738342.3
(22) Anmeldetag: 15.07.2015
(51) Int. Cl.: B60S 1/38

(54) **WISCHLIPPE FÜR EINE SCHEIBENWISCHVORRICHTUNG**
WIPER LIP FOR A WINDSHIELD WIPER DEVICE
LÈVRE D'ESSUYAGE POUR DISPOSITIF D'ESSUIE-GLACE

(30) Priorität: 24.07.2014 DE 102014214578
(43) Veröffentlichungstag der Anmeldung: 31.05.2017
(73) Patentinhaber: Robert Bosch GmbH, 70442 Stuttgart (DE)
(72) Erfinder: HACKL, Viktor, H-9400 Sopron (HU); SPAAN, Marcel, B-3500 Hasselt (BE); DEAK, Peter, H-1188 Budapest (HU); WEILER, Michael, 77815 Buehl (DE); BUSEYNE, Wim, B-3500 Hasselt (BE)
(86) Internationale Anmeldenummer: PCT/EP2015/066177
(87) Internationale Veröffentlichungsnummer: WO 2016/012328

(56) Entgegenhaltungen:
- WO-A1-2015/032580
- DE-A1- 4 317 833
- DE-A1-102013 214 064
- FR-A1- 2 630 383
- FR-A1- 2 706 397
- JP-U- S 603 151

## Beschreibung

Die Erfindung betrifft eine Scheibenwischvorrichtung für ein Fahrzeug, insbesondere ein Kraftfahrzeug, weiterhin insbesondere eine Wischlippe für eine Scheibenwischvorrichtung.

### Stand der Technik

Scheibenwischvorrichtungen haben typischerweise einen Wischarm oder Wischhebel, wobei ein Wischblatt, an welchem eine Wischlippe befestigt ist, auf der Scheibe eines Kraftfahrzeugs bewegt wird. Der Wischerarm wird alternierend zwischen einer ersten Wendelage und einer zweiten Wendelage bewegt. Zu diesem Zweck ist der Wischerarm über die Antriebswelle mit einem Wischermotor verbunden. Insbesondere auf Windschutzscheiben mit starken Krümmungsänderungen verliert das Wischblatt mit der Wischlippe leicht den Kontakt zur Scheibe. Hierdurch kann es, insbesondere bei stark gekrümmten Scheiben zu ungewischten Wischbereichen bzw. zu Schleierbildung kommen.

Bei aus dem Stand der Technik bekannten Scheibenwischvorrichtungen tritt häufig bei dem Umkehren des Wischerarms in den Wendestellungen ein Geräusch auf, welches, insbesondere in Abhängigkeit von dem Kraftfahrzeug und/oder einer Fahrsituation des Kraftfahrzeugs, als störend empfunden wird. Dieses Geräusch wird insbesondere dadurch verursacht, dass sich die Wischlippe bei einer Umkehrung der Bewegungsrichtung des Wischerarms beziehungsweise des Wischerblatts zunächst aufrichtet, wobei der Wischerarm von der Scheibe fort gedrängt wird, und anschließend in die jeweils andere Richtung umklappt. Bei dem Umklappen wird der Wischerarm mitsamt dem Wischblatt in Richtung der Scheibe beschleunigt. Dabei bewegt sich das Wischerblatt in Richtung der Scheibe und wird dann abrupt abgebremst. Durch die Beschleunigung und das Abbremsen entsteht ein Schlag gegen die Scheibe, welcher das Geräusch verursacht. Daher ist es eine Bedürfnis, Scheibenwischvorrichtungen weiter zu verbessern, insbesondere Geräusche der Scheibenwischvorrichtung zu vermeiden, oder zumindest zu verringern.
Darüber hinaus kann die Wischbewegung zu einer Torsion des Wischarms, d.h. einer Torsion um eine Achse, die im Wesentlichen der Längserstreckung des Wischarms oder Wischblatts entspricht, führen. Eine solche Torsion kann bei herkömmlichen Scheibenwischvorrichtungen sogar bis zum Kontakt des Wischarms mit einer Scheibe führen. Daher ist es weiterhin ein Bedürfnis, die Torsion des Wischarms zu reduzieren.

Bei der Verbesserung von Scheibenwischvorrichtungen gibt es eine Mehrzahl von Randbedingungen, die berücksichtigt werden sollten. Zu diesen gehören der Aufwand bei der Herstellung bzw. die Herstellungskosten, die Materialkosten, aber auch die Eigenschaften der Scheibenwischvorrichtung, insbesondere die Funktion unter vielfältigen Bedingungen sowie die Langlebigkeit unter einer Vielzahl von Bedingungen. Es gilt bei Wischvorrichtungen für Fahrzeuge dabei zu berücksichtigen, dass der Kostendruck stetig steigt und dass die Fahrzeuge in einer Vielzahl von klimatischen Bedingungen zum Einsatz kommen können, so dass z.B. extreme Temperaturwerte dauerhaft und/oder mit großen Schwankungen auftreten. DE-A-102013214064 offenbart den Oberbegriff des Anspruchs 1.

### Offenbarung der Erfindung

Es ist die Aufgabe der vorliegenden Erfindung, eine Wischlippe bereitzustellen, mit welcher zumindest einer oder mehrere der oben genannten Nachteile verringert werden oder im Wesentlichen nicht auftreten.

Diese Aufgabe wird durch die Gegenstände des Anspruchs 1 gelöst.
Gemäß Ausführungsformen der vorliegenden Erfindung wird eine Wischlippe bereitgestellt, welche für eine Scheibenwischvorrichtung mit einem Wischblatt mit einem langgestreckten Oberteil und einem langgestreckten Unterteil angepasst ist, welche zumindest teilweise biegbar ausgestaltet sind. Des Weiteren weist die Scheibenwischvorrichtung, an welche die Wischlippe angepasst ist, mehrere Verbindungselemente zum Verbinden des Oberteils und des Unterteils auf, welche entlang einer Längserstreckung des Wischblatts voneinander beabstandet sind. Ferner sind die Verbindungselemente ausgelegt, um eine Bewegung des Oberteils und des Unterteils relativ zu einander mit einer Bewegungskomponente entlang einer Längserstreckung des Wischblatts zu ermöglichen. Die Scheibenwischvorrichtung ist für ein Fahrzeug, insbesondere Kraftfahrzeug, angepasst. Die Wischlippe beinhaltet einen Biegebalken zur Reduzierung der Steifigkeit senkrecht zur Wischrichtung, insbesondere einen Biegebalken mit einer Wischkante und einer der Wischkante senkrecht zur Wischrichtung gegenüberliegenden Fläche des Biegebalkens, wobei angrenzend an die gegenüberliegende Fläche ein Spalt oder ein Hohlraum ist; eine Grundfläche mit der der Biegebalken an dem Unterteil verbunden ist; und einen weiteren Biegebalken zur Reduzierung der Steifigkeit senkrecht zur Wischrichtung, wobei der weitere Biegebalken an der Grundfläche an dem Unterteil verbunden ist.

Gemäß der Erfindung wird eine Scheibenwischvorrichtung für ein Fahrzeug, insbesondere ein Kraftfahrzeug, bereitgestellt. Die Scheibenwischvorrichtung umfasst ein langgestrecktes Oberteil, das zumindest teilweise biegbar ausgestaltet ist, ein langgestrecktes Unterteil, das zumindest teilweise biegbar ausgestaltet ist, und mehrere Verbindungselemente zum Verbinden des Oberteils und des Unterteils. Die Verbindungselemente sind entlang einer Längserstreckung des Wischblatts voneinander beabstandet und ausgelegt, um eine Bewegung des Oberteils und des Unterteils relativ zu einander mit einer Bewegungskomponente entlang einer Längserstreckung des Wischblatts zu ermöglichen. Ferner umfasst die Scheibenwischvorrichtung eine Wischlippe gemäß den hierin beschriebenen Ausführungsformen.
Bevorzugte, optionale Ausführungsformen und besondere Aspekte der Erfindung ergeben sich aus den abhängigen Ansprüchen, den Zeichnungen und der vorliegenden Beschreibung.

### Vorteile der Erfindung

Gemäß den hier beschriebenen Ausführungsformen können Fin-Ray Scheibenwischvorrichtung für Fahrzeugscheiben auf besonders günstige Weise und/oder für eine Mehrzahl unterschiedlicher Einsatzgebiete hergestellt werden. Die vorliegenden Ausführungsformen der Scheibenwischvorrichtung mit der Wischlippe gemäß den hierin beschriebenen Ausführungsformen ermöglichen eine besonders gute Anpassung an die Krümmung einer Scheibe. Dies gewährleistet ein besonders gutes und exaktes Wischen der Scheibe. Nicht gewischte Bereiche der Scheibe und eine Schleierbildung auf der Scheibe können weitgehend vermieden werden. Die konstruktive Ausgestaltung der herein beschriebenen Wischlippe ermöglicht einen weitgehend gleichmäßigen Anpressdruck der Wischlippe auf der Scheibe, so dass eine hohe Wischqualität bereitgestellt wird und ein Geräusch, insbesondere bei einer Umkehrung der Bewegungsrichtung des Wischerarms beziehungsweise des Wischblatts in einer Wendelage, verhindert oder zumindest reduziert wird. Zusätzlich oder alternative kann eine Reduktion der Torsion des Wischarms bewirkt werden. Die hier beschriebenen Wischlippen können in günstiger Weise mit Finray-Scheibenwischvorrichtungen kombiniert werden, da diese durch ihre geometrische Ausgestaltung für den Einsatz der hier beschriebenen Wischlippen geeignet sind.

Gemäß weiteren typischen Ausführungsformen kann sich der Biegebalken und der weitere Biegebalken ausgehend von der Grundfläche jeweils in eine Richtung parallel zur Wischrichtung und in einer entgegengesetzten Richtung erstrecken, insbesondere wobei die Grundfläche eine Grundfläche im Wesentlichen in der Mitte angeordnet ist. Hierdurch kann eine Verschiebung der Dominanten Wischkante auf die in Wischrichtung vordere Seite zur Verfügung gestellt werden.

Gemäß weiteren typischen Ausführungsformen kann die Wischkante in dem Biegebalken bzw. dem weiteren Biegebalken integriert sein, insbesondere können die Wischkante und der Biegebalken aus demselben Material bestehen. Alternativ kann die Wischkante an dem Biegebalken bzw. dem weiteren Biegebalken montiert sein oder auf den Biegebalken beschichtet sein, insbesondere wobei die Wischkante und der Biegebalken unterschiedliche Materialien umfassen. Bei einer integrierten Lösung kann vorteilhaft die Wischlippe oder gegebenenfalls sogar die Scheibenwischvorrichtung werkzeugfallend zur Verfügung gestellt werden. Im Gegensatz hierzu muss bei einer zweiteiligen Lösung eine Montage stattfinden. Andererseits kann die Montage aber auch zu einem vereinfachten Wechsel der Wischkante führen und/oder eine verbesserte Materialwahl für die Wischkante ermöglichen. Diese Alternativen können je nach Applikation zugunsten der einen oder zugunsten der anderen Richtung optimiert werden. Zum Beispiel kann die Grundfläche in einem Querschnitt senkrecht zur Längserstreckung der Wischlippe zwischen der Wischkante und der weiteren Wischkante angeordnet sein.

Nach der Erfindung bilden der Biegebalken und der weitere Biegebalken eine im Wesentlichen T-förmige Struktur aus. Hierdurch kann eine einfach Montage der beiden Wischkanten und/oder eine reduzierte Torsion zur Verfügung gestellt werden.

Gemäß Ausführungsformen der Offenbarung, die mit anderen hierin beschriebenen Ausführungsformen kombiniert werden können, hat die Wischkante einen Winkel von 60° bis 120°, insbesondere 90°. Somit wird eine Wischkante mit besonders hoher Wischqualität bereitgestellt.

Gemäß Ausführungsformen der Offenbarung, die mit anderen hierin beschriebenen Ausführungsformen kombiniert werden können, ist die Wischkante aus einem Material aus der Gruppe bestehend aus: TPE (Thermoplastischem Elastomer), insbesondere TPE-S, TPE-O, TPE-U, TPE-A, TPE-V, TPE-E; Ethylen-Propylen-Dien-Kautschuk (EPDM); Polychloropren und Naturkautschuk. Die Materialwahl der Wischkante, erlaubt die Einstellung der physikalischen Eigenschaften der Wischkante.
Weiterhin werden Scheibenwischvorrichtungen mit Wischlippen gemäß der hier beschriebenen Ausführungsformen zur Verfügung gestellt. Zum Beispiel der Biegebalken einteilig mit dem Unterteil ausgebildet ist, insbesondere wobei das Unterteil und der Biegebalken aus demselben Material bestehen. Hierdurch kann eine werkzeugfallende Scheibenwischvorrichtung oder eine Scheibenwischvorrichtung bei der lediglich die Wischkante auswechselbar ist zur Verfügung gestellt werden, die ferner die Vorteile der hier beschriebenen Wischlippen aufweist. Gegebenenfalls kann anstelle der auswechselbaren Wischkante oder zusätzlich zur auswechselbaren Wischkante auch eine lösbar verbindbare Wischlippe bzw. ein lösbar verbindbarer Biegebalken zur Verfügung gestellt werden. Durch die Trennung von Wischlippe und Unterteil der Scheibenwischvorrichtung kann für manche Applikationen u.a. eine verbesserte Materialwahl für die einzelnen Element erzielt werden.

Gemäß einer weiteren nicht beanspruchten Ausführungsform ist ein Verfahren zum Wechseln einer Wischkante einer Wischlippe für einen Scheibenwischer für ein Kraftfahrzeug, insbesondere einer Wischlippe nach einer der hier beschriebenen Ausführungsformen zur Verfügung gestellt. Das Verfahren beinhaltet das Einschieben der Wischkante oder des Biegebalkens entlang der Längserstreckung der Wischkante bzw. ankleben der Wischlippe. Hierdurch kann ein Auswechseln der Wischkante bei geringen bzw. reduzierten Materialkosten für das auszuwechselnde Teil erzielt werden.

### Kurze Beschreibung der Zeichnungen

Ausführungsbeispiele der Erfindung sind in den Figuren dargestellt und werden im Folgenden näher beschrieben. Es zeigen:
Figur 1A eine schematische Darstellung im Querschnitt einer Scheibenwischvorrichtung mit einer Wischlippe gemäß Ausführungsformen der vorliegenden Erfindung,
Figur 1B ein Ausschnitt einer Wischlippe gemäß Ausführungsformen der der vorliegenden Erfindung,
Figur 2 eine schematische Darstellung einer weiteren Scheibenwischvorrichtung mit einer weiteren Wischlippe gemäß Ausführungsformen der der vorliegenden Erfindung,
Figur 3 eine schematische Darstellung einer weiteren Scheibenwischvorrichtung mit einer weiteren Wischlippe gemäß Ausführungsformen der der vorliegenden Erfindung,
Figur 4A eine schematische Darstellung eines Wischblatts einer Scheibenwischvorrichtung gemäß Ausführungsformen der Offenbarung in einer Grundstellung,
Figur 4B eine schematische Darstellung des Wischblatts einer Scheibenwischvorrichtung gemäß Ausführungsformen der Offenbarung nach Fig. 4A in einer an eine Scheibe angelegten Stellung,
Figur 5A eine schematische Darstellung eines weiteren Ausführungsbeispiels einer erfindungsgemäßen Scheibenwischvorrichtung in Form eines Wischerarms mit integriertem Wischblatt in einer Grundstellung,
Figur 5B eine schematische Darstellung des Wischerarms mit integriertem Wischblatt nach Fig. 7A in einer an eine Scheibe angelegten Stellung,
Figur 6 eine schematische perspektivische Darstellung eines Wischerarms einer Scheibenwischvorrichtung gemäß Ausführungsformen der Offenbarung,
Figur 7A eine Scheibenwischvorrichtung mit einer Wischlippe gemäß Ausführungsformen der vorliegenden Erfindung,
Figur 7B ein vergrößerter Ausschnitt von Figur 7A,
Figuren 8A bis 8C schematische Darstellungen von Befestigungsvarianten von Wischlippe gemäß Ausführungsformen der der vorliegenden Erfindung mit Scheibenwischvorrichtungen gemäß Ausführungsformen der der vorliegenden Erfindung.
Figur 9 ein schematisches Ablaufdiagramm für ein Spritzgussverfahren zur Herstellung von Scheibenwischvorrichtungen gemäß Ausführungsformen der der vorliegenden Erfindung.
Figur 10 ein Ablaufdiagramm zur Illustration von Verfahren zum Wechseln von Wischkanten an Wischlippen gemäß Ausführungsformen der der vorliegenden Erfindung.

### Ausführungsformen der Erfindung

Im Folgenden werden, sofern nicht anders vermerkt, für gleiche und gleichwirkende Elemente gleiche Bezugszeichen verwendet.

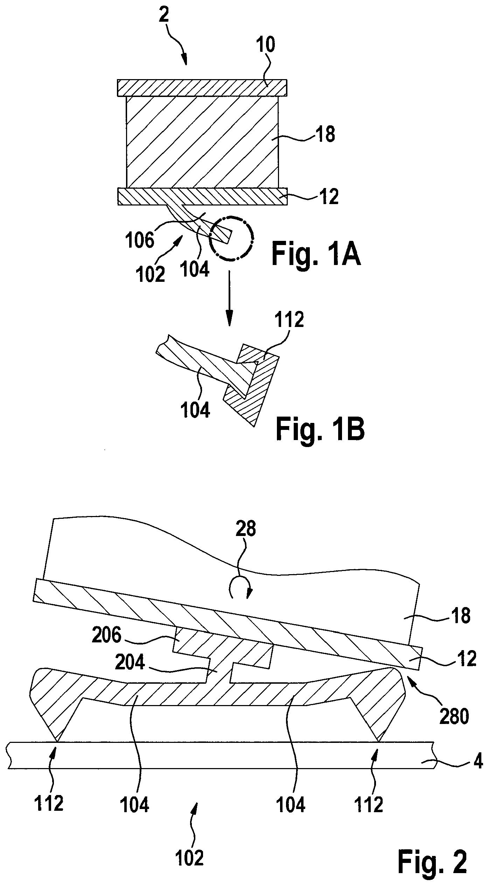

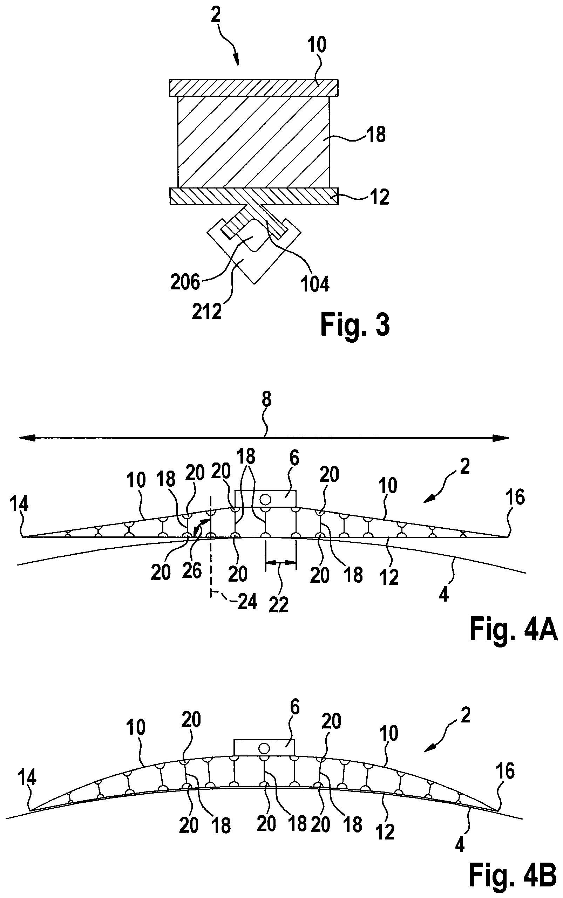

Figur 1A zeigt einen Querschnitt entlang der Längserstreckung einer Scheibenwischvorrichtung 2. Ein Oberteil 10 und eine Unterteil 12 sind durch mehrere Verbindungselement 18 verbunden, wobei in den jeweiligen hier gezeigten Querschnitten jeweils nur ein Verbindungsteil 18 sichtbar ist. Die Ausgestaltung der Scheibenwischvorrichtungen für die die hier beschriebenen Ausführungsformen von Wischlippen aufgrund der Geometrie der Scheibenwischvorrichtungen besonders einfach integriert werden können sind exemplarisch in den Figuren 4A, 4B, 5A, 5B und 6 beschrieben.

Das Unterteil 12 ist im Betrieb der Scheibenwischvorrichtung 2 einer Scheibe, z.B. einer Scheibe eines Kraftfahrzeugs, zugewandt. Die Scheibenwischervorrichtung 2 beinhaltet ferner eine Wischlippe 102. Die Wischlippe 102 beinhaltet einen Biegebalken 104, wie er zum Beispiel in Figur 1A dargestellt ist, und eine Wischkante 112, wie sie zum Beispiel in Figur 1B dargestellt ist. Der Biegebalken 104 ist derart ausgestaltet, dass zwischen dem Biegebalken 104 und dem Unterteil 12 ein Spalt 106 zur Verfügung gestellt ist. Der Spalt 106 erhöht die Elastizität bzw. verringert die Steifigkeit in einer Richtung senkrecht zur Wischrichtung. Wie der Figuren 1A exemplarisch zu entnehmen ist, befindet sich die Wischrichtung hier in horizontaler Richtung. Somit verringert sich die Steifigkeit in Figur 1A in vertikaler Richtung.

An dem Biegebalken 104 ist die Wischkante 112 zur Verfügung gestellt. Diese kann, wie in Figur 1B dargestellt, zum Beispiel mit einem Hinterschnitt ausgestaltet sein, so dass die Wischkante 112 auf den Biegebalken 104 geschoben werden kann. Gemäß anderen Ausführungsformen, die mit den hier beschriebenen Ausführungsformen kombiniert werden können, kann die Wischkante 112 auch integral mit dem Biegebalken 104 ausgebildet sein. Hierdurch kann eine vereinfachte Herstellung zur Verfügung gestellt werden. Es bleibt jedoch zu bedenken, dass in diesem Falle das Material des Biegebalkens 104 auch als Wischkante 112 geeignet sein sollte, so dass ein zufriedenstellendes Wischergebnis beim Kontakt dieses Materials mit einer Scheibe zur Verfügung gestellt wird.

Bei der exemplarisch in Figur 1A dargestellten Ausführungsform, ist das Unterteil 12 und der Biegebalken 104 einteilig ausgestaltet. Zum Beispiel kann das Unterteil 12 unter Biegebalken 104 in einem Arbeitsschritt und/oder aus einem Material einteilig hergestellt werden. Weiterhin ist es möglich, dass die Scheibenwischervorrichtung 2 mit dem Oberteil 10, den Verbindungselementen 18, dem Unterteil 12 und dem Biegebalken 104 einteilige hergestellt wird bzw. einteilige zur Verfügung gestellt ist. In einem solchen Fall kann, insbesondere bei einer integral mit dem Biegebalken 104 zur Verfügung gestellten Wischlippe 112, eine Scheibenwischervorrichtung 2 werkzeugfallend hergestellt werden. Gemäß weiteren Ausführungsformen, die mit den hier beschriebenen Ausführungsformen kombiniert werden können, und wie in Bezug auf weitere Figuren beschrieben, kann ein Biegebalken auch am Unterteil 12 befestigt bzw. montiert werden. Eine zweiteilige oder mehrteilige Ausgestaltung des Unterteils 12 und des Biegebalkens 104 führt in diesem Zusammenhang zu einer erhöhten Flexibilität in der Materialwahl der einzelnen Komponenten.

Durch die Biegebalken 104 wird ein Spalt 106 bzw. ein Hohlraum geschaffen, der die Steifigkeit der Wischlippe 102 senkrecht zur Wischrichtung verkleinert. Somit kann gemäß Ausführungsformen der vorliegenden Erfindung eine Wischlippe zur Verfügung gestellt werden, die eine Steifigkeit in Wischrichtung hat, die höher ist als die Steifigkeit senkrecht zur Wischrichtung. Hierdurch kann ein umklappen der Wischlippe verhindert werden. Das umklappen würde im Betrieb eines Kraftfahrzeugs zu störenden Nebengeräuschen führen.

Gemäß einigen Ausführungsformen, die mit den hier genannten Ausführungsformen kombiniert werden können, und wie in der Figur 1A dargestellt, kann der Biegebalken 104 aus demselben Material bestehen wie das Unterteil 12 bzw. wie die Scheibenwischvorrichtung 2, z.B. eine Finray-Struktur. Figur 3 beschreibt eine Ausführungsform, bei der der Biegebalken bzw. die Wischlippe mit dem Biegebalken aus einem anderen Material hergestellt ist. Als Schnittstelle zur Scheibe, d.h. für die Reinigung, kann ein zusätzliches gummiartiges Element gewählt werden. Hierdurch kann für die Beeinflussung der Steifigkeit bzw. die Federwirkung des Biegebalkens ein vergleichsweise günstiges Material verwendet werden. Für die Gummikante, d.h. die Wischkante 112, kann ein hochwertigeres bzw. teureres Gummikantenmaterial verwendet werden, wobei der Materialeinsatz auf ein Minimum reduziert wird.

Gemäß weiteren Ausführungsformen, die mit den hier beschriebenen Ausführungsformen kombiniert werden können kann die Steifigkeit des Biegebalkens über die Länge der Scheibenwischvorrichtung 2, d.h. entlang der Längserstreckung 8 der Scheibenwischvorrichtung 2, variabel, d.h. räumlich variabel, zur Verfügung gestellt werden. Hiermit können gegebenenfalls existierende Auflage Kraftschwankungen entlang der Längserstreckung der Scheibenwischvorrichtung 2 über die angepasste Steifigkeit des Biegebalkens 104 angepasst werden.

Gemäß weiteren Ausführungsformen kann der Spalt bzw. die Spalte 106 gefüllt sein. Im häufigsten Fall kann er nicht gefüllt sein, d.h. lediglich mit Luft bzw. der Umgebungsluft gefüllt sein. Er kann jedoch auch mit einem kompressiblen Medium bzw. einem elastischen Material gefüllt sein. Dieses Material hat typischerweise ein Elastizitätsmodul das zumindest um den Faktor 2 geringer ist als das Material des Biegebalkens 104, insbesondere ein Material mit einem um den Faktor 10 geringeren Elastizitätsmodul.

Figur 2 zeigt eine Ausführungsform einer Scheibenwischvorrichtung, bei der 2 Biegebalken 104 in dem Unterteil 12 zur Verfügung gestellt sind. Figur 2 zeigt einen Ausschnitt einer Scheibenwischvorrichtung, wobei das Unterteil 12 und ein Teil eines Verbindungselements 18 dargestellt ist. An dem Unterteil 12 ist eine Wischlippe 102 befestigt, die auf einer Scheibe 4 zum Beispiel einer Scheibe eines Kraftfahrzeugs, zur Verfügung gestellt ist. Gemäß manchen Ausführungsformen hat die Wischlippe 102 einen Befestigungsbereich 206. Dieser kann sich entlang der Längserstreckung der Scheibenwischvorrichtung erstrecken. Zwischen dem Befestigungsbereich 206 und dem Biegebalken 104 ist ein Verbindungsbereich 204 zur Verfügung gestellt. Der Verbindungsbereich 204 kann eine vordefinierte Elastizität zur Verfügung stellen, die eine Torsion (siehe Pfeil 28) erlaubt. Der Verbindungsbereich 204 kann somit als eine Verlängerung des Biegebalkens 104 angesehen werden, der eine Elastizität bzw. eine Biegung in einer Richtung senkrecht zur Wischrichtung erlaubt.

Gemäß typischen Ausführungsformen ist der Verbindungsbereich 204, zwischen einem ersten Biegebalken 104, zum Beispiel dem linken Biegebalken in Figur 2, und einem zweiten Biegebalken, zum Beispiel dem rechten Biegebalken in Figur 2, angeordnet. Gemäß hier beschriebenen Ausführungsformen, erstrecken sich die Biegebalken von einer Kontaktposition mit dem Unterteil 12, die zum Beispiel in etwa mittig am Unterteil 12 angeordnet ist, nach außen. Zum Beispiel kann der Befestigungsbereich 206 zwischen einer Wischkante 112 am ersten Biegebalken und einer Wischkante 112. zweiten Biegebalkens angeordnet sein. Dies führt bei einer Torsion, wie durch Pfeil 28 dargestellt, dazu, dass die führende Wischlippe 112, das heißt die in Wischrichtung fordere Wischlippe, im Vergleich zu der in Wischrichtung hinteren Wischlippe eine größere Anpresskraft erfährt. Gemäß einigen hier beschriebenen Ausführungsformen ist der Kontakt der Scheibenwischvorrichtung mit der Scheibe in Richtung der Vorderseite des Unterteil 12, das heißt der Vorderseite in Wischrichtung, verschoben.

Bei einer Torsion des Wischblatts, wie durch Pfeil 28 dargestellt führt die Ausgestaltung der Wischlippe 102 zu einem Anschlag 280 zwischen einem Teil des Biegebalkens 104 und dem Unterteil 12 oder eine anderen entsprechenden Trägerstruktur der Scheibenwischvorrichtung. In Figur 2 ist beispielhaft eine Wischrichtung nach rechts dargestellt. Auf der einen Seite führt die Verschiebung des Schwerpunktes des Scheibenkontakts zur in Wischrichtung vorderen Kante des Wischarms zu einer Reduktion der Torsion. Auf der anderen Seite verhindert der Anschlag 280 ein Kontakt des Wischarm, zum Beispiel des Unterteil 12, mit der Scheibe.

Die Verschiebung des Schwerpunktes des Scheibenkontakts zur in Wischrichtung vorderen Kante des Wischarms generiert ein zusätzliches Moment, das dem durch die Reibungskraft erzeugten Moment entgegen gerichtet ist. Ferner hilft der stärkere Kontakt einer Wischkante 112 für eine verbesserte Dichtung der Wischkante mit der Scheibe.

Daher kann gemäß Ausführungsformen der vorliegenden Erfindung eine Wischlippe bzw. eine Scheibenwischvorrichtung zur Verfügung gestellt werden die einen besseren Kontakt bzw. eine bessere Dichtung mit der Scheibe zur Verfügung gestellt. Es ist ferner möglich das Risiko einer Kollision zwischen Wischarms Struktur, zum Beispiel dem Unterteil 12, der Scheibe zu reduzieren. Dies ist unter anderem dadurch möglich, dass der Kontaktpunkt bzw. der dominierende Kontaktpunkt der Scheibenwischvorrichtung mit der Scheibe nicht in Wischrichtung hinter dem Mittelpunkt des Wischarms oder einem Trägerelement des Wischarms liegt, wodurch die Torsion erhöht wird, sondern in Wischrichtung nach vorne verschoben wird bzw. in Wischrichtung vor der Mitte eines Trägerelements, wie zum Beispiel dem Unterteil 12, liegt, wodurch die Torsion reduziert wird.

Es kann das Risiko eines Kontakts zwischen Wischarm, d.h. einem Trägerelement des Wischarms in der Scheibe reduziert werden, was zu Beschädigungen, Lärm, und ungewollter Instabilitäten währendes nichts führen kann. Die Ausgestaltung mittels eines Biegebalkens kann ferner das Umklappen der Wischlippe reduzieren, was zu einem reduzierten umklappen Geräusch führt. Die gemäß manchen Ausführungsformen so Verfügung gestellte zweite Wischkante führt zu einer höheren Stabilität des Wischens. Insbesondere kann die Dominanz der vorderen Wischkante d.h. der in Wischrichtung vorderen Wischkante, zu einer guten Dichtung zur Scheibe führen.

Gemäß typischen Ausführungsformen sind die zwei Biegebalken und die zwei Wischkanten symmetrisch oder annähernd symmetrisch aufgebaut. Es kann durch die Form möglich sein, d.h. durch die typischerweise symmetrische Form der zwei Wischkanten, dass sich das Biegemoment (Normalkraft * Hebelarm) weitgehend aufhebt. Daraus folgt ein reduziertes Biegemoment. Ein Einfluss der Normalkraft kann im Vergleich zu bekannten Wischlippen reduziert werden, bei denen der Abstand zwischen der Kontaktposition der Wischkante auf der Scheibe zu der Mitte des Unterteils abhängig ist von den wirkenden Normalkräften bzw. der Biegung der Wischlippe. Bei dem Design mit zwei Kanten ist der Abstand zwischen der Kontaktposition der Wischkante auf der Scheibe zu der Mitte des Unterteils weniger durch die wirkenden Normalkräfte beeinflusst.

Bei herkömmlichen Wischkantenprofilen, bei dem die Wischlippe aus einer geneigten Stellung und mit einer unklar Bewegung wischt, wird das Torsionsmoment, das durch die Reibungskraft zwischen der Wischlippe der Scheibe erzeugt wird, durch die Anpresskraft zwischen der Wischkante und der Scheibe verstärkt. Bei einer nicht umklappenden einzelnen Wischkante, wie Sie zum Beispiel in Figur 3 dargestellt ist, wird ein Torsionsmoment im Wesentlichen durch die Reibungskraft erzeugt. Der Einfluss der Anpresskraft ist hierbei gering. Eine solche Ausgestaltung, wie sie in Figur 3 dargestellt ist, kann gemäß manchen Ausführungsformen jedoch den Vorteil einer Begrenzung der Torsion, zum Beispiel durch einen Anschlag, zur Verfügung stellen.

Durch eine Wischlippe mit zweit Wischkanten, bei der gemäß Ausführungsformen der Erfindung der dominierende Kontaktpunkt zur in Wischrichtung vorderen Seite eines Trägerelements für die Wischlippe, zum Beispiel dem Unterteil 12, verschoben ist wird ein Torsionsmoment erzeugt, dass dem durch die Reibungskraft erzeugten Torsionsmoment entgegengesetzt ist.

Figur 3 zeigt eine Ausführungsform, bei der zwei Biegebalken an dem Unterteil 12 zur Verfügung gestellt sind. Eine Wischkante 212 kann auf die Struktur der beiden Biegebalken 104 aufgeschoben werden, wobei eine Kante zur Verfügung gestellt wird, die mit der Scheibe während des Wischens in Kontakt kommt. Die Wischkante 212 oder der Biegebalken bzw. die Biegebalken 104 können mit einem Hinterschnitt versehen werden, so dass eine zuverlässige Befestigung beim Aufschieben oder Aufklemmen der Wischlippe 212 auf die Biegebalken 104 zur Verfügung gestellt wird. Neben einem Spalt zwischen dem jeweiligen Biegebalken 104 und dem Unterteil 12 der Scheibenwischvorrichtung 2 wird ein in Figur 3 dargestellter weiterer Hohlraum 106 zur Verfügung gestellt. Der Hohlraum 106 kann ausgestaltet sein um die Steifigkeit der Wischlippe senkrecht zur Wischrichtung weiter zu beeinflussen.

Das Einschieben bzw. Aufklemmen der Wischlippe 212 auf die Struktur eines Biegebalkens bzw., wie in Figur 3 dargestellt einer Struktur aus zwei Biegebalken 104 ermöglicht ein einfaches Ersetzen der Wischlippe 212 für eine Scheibenwischvorrichtung 2, zum Beispiel einen Finray-Wischer. Hierdurch kann für den Handel eine einfache Möglichkeit zur Verfügung gestellt werden, die Wischlippe einer Scheibenwischvorrichtung 2 zu ersetzen. Aufgrund der Tatsache, dass lediglich die Wischlippe ausgetauscht wird, ist für den Austausch ein reduzierter bzw. minimierter Materialaufwand erforderlich. Dies ist unter anderem günstig für die immer weiter steigenden Bemühungen ökologisch sinnvoll zu handeln.

Im Folgenden wird eine beispielhafte Scheibenwischvorrichtung beschrieben, für welche die hierein beschriebene Wischlippe verwendet werden kann. Grundsätzlich, kann die hierein beschriebene Wischlippe jedoch auch für andere Scheibenwischvorrichtung verwendet werden.

Figuren 4A und 4B zeigen schematische Darstellungen eines Wischblatts 2 in einer Grundstellung (Figur 4A) und in einer an eine Scheibe angelegten Stellung (Figur 4B) gemäß Ausführungsformen der Scheibenwischvorrichtung der Offenbarung. Das Wischblatt 2 dient zum Wischen einer Scheibe 4 eines Fahrzeugs, das zum Beispiel ein Kraftfahrzeug ist, insbesondere ein Auto. Üblicherweise ist das Wischblatt 2 an einem Scheibenwischerarm angebracht, der zum Wischen mittels eines Motors angetrieben wird. Dazu weist das Wischblatt 2 eine Halterung 6 auf, an der es an dem Scheibenwischerarm befestigt werden kann. Das Wischblatt 2 befindet sich in der Fig. 4A in einer Grundstellung, in der sie zumindest teilweise von der Scheibe 4 abgehoben ist. Das Wischblatt 2 hat eine Längserstreckung 8 und weist ein langgestrecktes Oberteil 10 und ein ebenfalls langgestrecktes Unterteil 12 auf. Die Längserstreckung des Oberteils 10 und des Unterteils 12 entsprechen im Wesentlichen der Längserstreckung 8 des Wischblatts 2.

Sowohl das Oberteil 10 als auch das Unterteil 12 sind biegbare Balken oder können als biegbare Balken ausgestaltet sein, die in den Figuren 4A und 4B exemplarisch jeweils einteilig ausgebildet sind. Das ermöglicht eine besonders stabile Konstruktion. Es ist ebenso möglich, nur jeweils einen Teil des Oberteils 10 und/oder des Unterteils 12 biegbar auszugestalten. Ferner ist es alternativ möglich, das Oberteil 10 zweiteilig ausgestaltet, wobei dann jeweils ein Ende der beiden Teile des zweiteiligen Oberteils 10 an der Halterung 6 befestigt sind.

Gemäß manchen Ausführungsformen, die mit den anderen hier beschriebenen Ausführungsformen kombiniert werden können, wird für das Oberteil 10 und/oder das Unterteil 12 ein Material eingesetzt, das einen Elastizitätsmodul hat, der in einem Bereich zwischen 0,005 kN/mm² und 0,5 kN/mm², insbesondere 0,01 kN/mm² und 0,1 kN/mm², liegt. Dies ermöglicht eine geeignete Biegefähigkeit des Oberteils 10 und des Unterteils 12. Zusammen mit einer geeignet ausgestalteten Querschnittsfläche des Oberteils 10 und des Unterteils 12 ergibt sich so eine optimale Biegesteifigkeit. Das Oberteil 10 und das Unterteil 12 sind so angeordnet, dass sie sich gegenüberliegen. Beide Enden des Oberteils 10 sind an äußeren Verbindungspositionen 14 und 16 mit jeweils einem Ende des Unterteils 12 fest verbunden. Ansonsten sind das Oberteil 10 und das Unterteil 12 voneinander beabstandet.

Das Oberteil 10 und das Unterteil 12 sind durch Verbindungselemente 18 miteinander verbunden. Insbesondere in der Grundstellung des Wischblatts 2, verlaufen diese in etwa quer zur Längserstreckung 8 des Wischblatts 2. Die Verbindungselemente 18 sind an einander zugewandten inneren Längsseiten des Oberteils 10 und des Unterteils 12 mittels Drehgelenken 20 befestigt. Die Drehgelenke 20 sind hier Scharniere. Insbesondere können die Drehgelenke 20 als Filmscharniere ausgebildet sein. Dies ist vor allem dann vorteilhaft, wenn Oberteil 10, Unterteil 12 und/oder Verbindungselemente 18 aus einem Kunststoffmaterial hergestellt oder mit einem geeigneten Kunststoffmaterial überzogen sind.

Gemäß typischen hier beschriebenen Ausführungsformen, die mit anderen hier beschriebenen Ausführungsformen kombiniert werden können, ist ein Drehgelenk aus der folgenden Gruppe ausgewählt, die besteht aus: einem Scharnier, einem Filmscharnier, einer Verjüngung des Materials zur Erzeugung geringerer Steifigkeit entlang einer Torsionsachse, einem Gelenk mit einer Rotationsachse, einem Mittel zur Verbindung des Oberteils mit dem Verbindungselement oder zur Verbindung des Unterteils mit dem Verbindungselement, das die Verschiebung des Unterteils in Bezug auf das Oberteil entlang der Längserstreckung erlaubt, etc.

Ausführungsformen, bei denen das Gelenk durch ein Filmscharnier zur Verfügung gestellt ist, stellen somit eine sehr einfache Art und Weise zur Verfügung, um die Gelenke für einen Fin-Ray-Wischer zur Verfügung zu stellen. Das Wischblatt 2 kann einteilige, insbesondere werkzeugfallend, zur Verfügung gestellt werden. Gemäß typischen Ausführungsformen haben die Filmscharniere eine hohe Dehnbarkeit. Dies kann zum Beispiel durch ein Material ausgewählt aus der Gruppe PP, PE, POM, und PA, zur Verfügung gestellt werden. Alternativ können die Filmscharniere aus einem oder mehreren Materialen aus einer Gruppe bestehend aus: TPE (Thermoplastischem Elastomer), beispielsweise TPE-S, TPE-O, TPE-U, TPE-A, TPE-V und TPE-E hergestellt sein.

Die Verbindungselemente 18 sind entlang der Längserstreckung des Wischblatts 2 voneinander beabstandet. Die Abstände zwischen jeweils zwei benachbarten Verbindungselementen 18 sind gleich. Sie können aber auch unterschiedlich gewählt werden. Die Abstände sind vorteilhafterweise kleiner als 50 mm, insbesondere kleiner als 30 mm. Dadurch kann eine besonders hohe Flexibilität der Scheibenwischvorrichtung, insbesondere ihres Unterteils, und gute Anpassung an die Krümmung und Krümmungsänderungen der zu wischenden Scheibe gewährleistet werden. In Figur 4A ist stellvertretend für die Abstände zwischen jeweils zwei Verbindungselementen 18 ein Abstand 22 dargestellt. Die Verbindungselemente 18 sind, insbesondere in der Grundstellung des Wischblatts 2, so an dem Unterteil 12 befestigt, dass ihre Längsachsen in Winkeln 26 zum Unterteil 12 verlaufen, die zwischen 65° und 115°, insbesondere zwischen 75° und 105°, liegen. Besonders vorteilhaft liegen die Winkel zwischen 80° und 100°. Dies gewährleistet vorteilhafterweise eine besonders gute Übertragung einer auf das Unterteil wirkenden Kraft auf das Oberteil. Ferner kann auf diese Weise eine besonders stabile Scheibenwischvorrichtung erreicht werden. Entsprechendes gilt für die Befestigungen der Verbindungselemente 18 an dem Oberteil 10.

Entsprechendes gilt im vorliegenden Ausführungsbeispiel für die Befestigungen der Verbindungselemente 18 an dem Oberteil 10.

In der Fig. 4A ist beispielhaft für die Längsachsen der Verbindungselemente 18 eine Längsachse 24 und beispielhaft für die Winkel zwischen den Verbindungselementen 18 und dem Unterteil 12 ein Winkel 26 dargestellt. Die Abstände zwischen dem Oberteil 10 und dem Unterteil 12 werden vor allem durch die Längen der Verbindungselemente 18 bestimmt. Die Längen der Verbindungselemente 18 nehmen, ausgehend von den beiden äußeren Verbindungspositionen 14, 16 bis in etwa zu denjenigen Stellen, an denen die an das Oberteil 10 angebrachte Halterung 6 beginnt, zu. Dadurch bilden Oberteil 10 und Unterteil 12 in der Seitenansicht auf das Wischblatt 2 nach Fig. 4A einen Doppelkeil aus, wobei die Spitzen der beiden Keile in entgegengesetzte Richtungen weisen. Die Verbindungselemente 18 sind knicksteif ausgeführt.

Fig. 4B zeigt eine schematische Darstellung des Wischblatts 2 nach Fig. 4A in einer an die Scheibe 4 angelegten Stellung. Da die Scheibe 4 eine Krümmung hat, wirken beim Anlegen des Wischblatts 2 an die Scheibe 4 Kontaktdruckkräfte auf das Unterteil 12. Da das Oberteil 10 und das Unterteil 12 biegbare Balken und die Verbindungselemente 12 drehbar an Oberteil 10 und Unterteil 12 gelagert sind, sind das Oberteil 10 und das Unterteil 12 gegeneinander verschiebbar. Durch die von unten auf das Unterteil 12 wirkenden Druckkräfte biegt sich das Wischblatt 2 in diejenige Richtung, aus der die Druckkräfte kommen, und legt sich genau an die Krümmung der Scheibe 4 an.

Durch den Aufbau der hier beschriebenen Ausführungsformen, findet bei einer Krafteinwirkung auf das Unterteil (durch die Scheibe 4) eine Biegung des Unterteils in die Richtung statt, aus der die Kraft wirkt. Dies ist durch die Verbindung des Oberteils 10 und des Unterteils an einem Verbindungspositionen 14 und/oder 16, die Form, und durch Drehgelenke an der Verbindung zwischen den Verbindungselementen und dem Ober- bzw. Unterteil gegeben.

In der Darstellung nach Fig. 4B ist zwischen dem Wischblatt 2 und der Scheibe 4 ein kleiner Abstand vorhanden, der hier nur der Verdeutlichung der Scheibe 4 und des Wischblatts 2 dient und der in Realität bei Anlegen des Wischblatts 2 an die Scheibe 4 weitgehend so nicht vorhanden ist. Des Weiteren befindet sich typischerweise an der dem Oberteil 10 abgewandten Unterseite des Unterteils 12 eine Wischlippe 102 gemäß den hierin beschriebenen Ausführungsformen, wie exemplarisch in Fig. 1 dargestellt ist, welche zum Wischen auf der Scheibe 4 aufsetzt. Aus Gründen der Übersichtlichkeit ist die Wischlippe in den Figuren 4A und 4B nicht dargestellt.

Eine Scheibenwischvorrichtung gemäß hier beschriebener Ausführungsformen nutzt den Effekt von Schwanzflossen bestimmter Fische, die bei seitlichem Druck nicht in Druckrichtung ausweichen, sondern sich in entgegengesetzte Richtung wölben, d. h. in die Richtung, aus der der Druck kommt. Dieses Prinzip wird auch als Flossenstrahl-Prinzip oder "Fin Ray"-Prinzip bezeichnet. Dadurch hat eine Scheibenwischvorrichtung gemäß den hierin beschriebenen Ausführungsformen den Vorteil einer verbesserten Anpassung an eine Scheibe eines Kraftfahrzeugs. Bei einem herkömmlichen Scheibenwischblatt ist dessen Oberteil üblicherweise starr, d. h. es ist nicht biegbar ausgebildet.

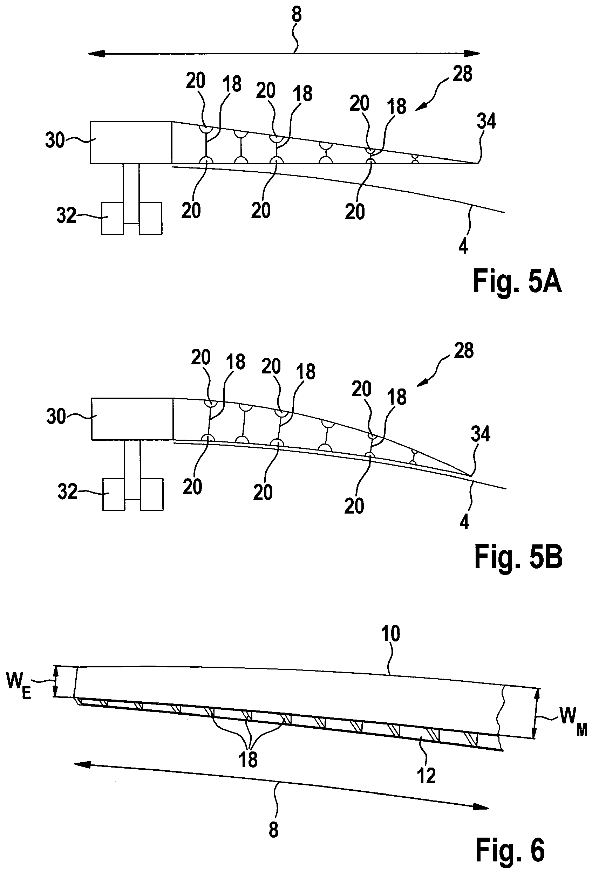

Figuren 4A und 4B zeigen ein Wischblatt 2 mit einer Längserstreckung 8, die sich im Wesentlichen zwischen den Verbindungspositionen 14 und 16 erstreckt. Eine solche Anordnung wird häufig für Frontscheibenwischer verwendet. Alternative kann ein Scheibenwischvorrichtung jedoch auch nur eine Verbindungsposition aufweisen, was in Analogie zu den Figuren 4A und 4B eine Halbierung der Scheibenwischvorrichtung entspricht, und wobei zum Beispiel an einer Position der Halterung 6 eine Drehachse vorgesehen. Eine solche Anordnung wird häufig für Heckscheibenwischer verwendet. Dies ist beispielhaft unter anderem in den Figuren 5A und 5B dargestellt. Optionale Ausgestaltungen und Details, wie Sie in den einzelnen Ausführungsformen beschrieben sind, können im Allgemeinen für beide Varianten einer Anordnung eine Scheibenwischvorrichtung verwendet werden.

Figur 5A zeigt eine schematische Darstellung eines weiteren Ausführungsbeispiels der erfindungsgemäßen Scheibenwischvorrichtung in der Grundstellung. Die Scheibenwischvorrichtung ist hier ein Wischerarm mit einem integrierten Wischblatt 2, das an einem Befestigungsteil 30 angebracht ist. Das Befestigungsteil 30 ist mit einem Wischermotor 32 verbunden, der das Befestigungsteil 30 zum Wischen der Scheibe 4 antreibt. Das Wischerblatt 2 ist keilförmig ausgestaltet, wobei ein Ende des Oberteils 10 an einer äußeren Verbindungsposition 34 mit einem Ende des Unterteils 12 fest verbunden ist. Das jeweils andere Ende des Oberteils 10 und des Unterteils 12 sind an dem Befestigungsteil 30 befestigt. Betreffend den grundlegenden Aufbau und insbesondere die Befestigungen der Verbindungselemente 18 entspricht die Scheibenwischvorrichtung nach Fig. 5A prinzipiell derjenigen nach Fig. 5A.

Fig. 5B zeigt eine schematische Darstellung des Wischblatts 2 mit integriertem Wischerarm 30 nach Fig. 5B in einer an die Scheibe 4 angelegten Stellung. Auch hier wirken von unten aus der Richtung der Scheibe 4 Druckkräfte auf das Unterteil 12 des Wischblatts 2, so dass sich das Unterteil 12 und das Oberteil 10 in Richtung der Scheibe 4 biegen.

Sowohl in FIG. 4A als auch in FIG. 5A ist das Wischblatt in seiner nicht an die Scheibe angelegten Stellung derart dargestellt, dass das Unterteil 12 im Wesentlich gerade ausgebildet ist. Gemäß noch weiteren Ausführungsformen, die mit anderen Ausführungsformen kombiniert werden können, ist das Unterteil im unbelasteten Zustand konvex ausgebildet, d.h. mit einer Wölbung, die in einem Mittelbereich vom Oberteil weg ragt. Die Scheibenwischvorrichtung gemäß der hier beschriebenen Ausführungsformen können typischerweise bei Kontakt mit eine Scheibe ausgehend von der konvexen Form des Unterteils, dann die entsprechende konkave Form des Unterteils, die sich an die Scheibe anpasst, annehmen.

Gemäß einer weiteren bevorzugten Ausführungsform können die mehreren Verbindungselemente an mehreren oberen Verbindungspositionen mit dem Oberteil und an mehreren unteren korrespondierenden Verbindungspositionen mit dem Unterteil verbunden sein, wobei bei der Bewegung des Oberteils und des Unterteils relativ zueinander der Abstand zwischen einer oberen Verbindungspositionen und einer korrespondierenden unteren Verbindungsposition, im Wesentlichen konstant ist, insbesondere konstant ist mit einer Abweichung von ±1 mm. Hierdurch kann eine Kraftübertragung zwischen dem Oberteil und dem Unterteil zur Verfügung gestellt werden, die eine Scheibenwischvorrichtung ermöglicht, die gemäß dem Finray-Prinzip arbeitet.

Die Verbindungselemente 18 sind an einander zugewandten inneren Längsseiten des Oberteils 10 und des Unterteils 12 mittels Drehgelenken 20 befestigt. Typischerweise sind die Drehgelenke 20 Scharniere. Insbesondere können die Drehgelenke 20 als Filmscharniere ausgebildet sein. Dies ist vor allem dann vorteilhaft, wenn das Oberteil 10, das Unterteil 12 und/oder die Verbindungselemente 18 aus einem Kunststoffmaterial hergestellt oder mit einem geeigneten Kunststoffmaterial überzogen sind.

Gemäß typischen hier beschriebenen Ausführungsformen, die mit anderen hier beschriebenen Ausführungsformen kombiniert werden können, ist ein Drehgelenk aus der folgenden Gruppe ausgewählt, die besteht aus: einem Scharnier, einem Filmscharnier, einer Verjüngung des Materials zur Erzeugung geringerer Steifigkeit entlang einer Torsionsachse, einem Gelenk mit einer Rotationsachse, einem Mittel zur Verbindung des Oberteils mit dem Verbindungselement oder zur Verbindung des Unterteils mit dem Verbindungselement, das die Verschiebung des Unterteils in Bezug auf das Oberteil entlang der Längserstreckung erlaubt, etc.

Die Verbindungselemente sind an dem Oberteil 10 an einer jeweiligen oberen Verbindungsposition verbunden und an dem Unterteil 12 an einer jeweiligen unteren Verbindungsposition. Zum Beispiel ist an den Verbindungspositionen jeweils ein Drehgelenk zur Verfügung gestellt. Bei einer Bewegung des Oberteils 10 des Unterteil 12 relativ zueinander verändert sich der Abstand einer oberen Verbindungsposition zu einer unteren Verbindungsposition am selben Verbindungselement im Wesentlichen nicht, d.h. der Abstand ist mit Abweichungen von zum Beispiel ±1 mm, insbesondere ±0,3 mm konstant.

Weiter hat das Wischblatt 2 ein Kopfende. Am Kopfende ist ein Befestigungsteil 30, d.h. ein wischblattseitiges Befestigungsteil 30, zur Verfügung gestellt. Entlang der Längserstreckung des Wischblatts 2 wird der Abstand zwischen dem Oberteil 10 und dem Unterteil 12 ausgehend vom Kopfende kleiner, zumindest in Bereichen der Längserstreckung des Wischblatts bzw. in einer überwiegenden Teil der Längserstreckung des Wischblatts. Ausgehend vom Kopfende läuft die Höhe des Wischblatts in Bereichen keilförmig zu bzw. wird in Bereichen der Längserstreckung kleiner. Zum Beispiel kann gemäß Ausführungsformen für eine Mehrzahl der Verbindungselemente die Länge der Verbindungselemente derart zur Verfügung gestellt werden, dass die am Kopfende zur Verfügung gestellten Verbindungselemente länger sind als die an der gegenüberliegenden Seite des Wischblatts entlang der Längserstreckung.

Figur 6 eine schematische perspektivische Darstellung eines Wischblatts 2 einer Scheibenwischvorrichtung gemäß Ausführungsformen der Offenbarung. Wie in Figur 6 dargestellt ist, weist das Wischblatt 2 an den äußeren Verbindungspositionen, an welchem die Enden des langgestreckten Oberteils 10 und des Unterteils 12 miteinander verbunden sind eine äußere Breite W_{E} auf. Gemäß typischen Ausführungsformen ist die äußere Breite W_{E} mindestens 15 mm, insbesondere mindestens 20 mm, insbesondere mindestens 25 mm.

Gemäß Ausführungsformen der Offenbarung, die mit anderen Ausführungsformen kombiniert werden können, nimmt die Breite des Wischblatts 2 von den äußeren Verbindungspositionen in Richtung des Befestigungsteils 30 oder der Halterung 6, an der das Wischblatt an dem Scheibenwischerarm befestigt werden kann, zu. In Figur 6 ist beispielhaft eine innere Breite mit W_{M} bezeichnet. Gemäß typischen Ausführungsformen ist die innere Breite W_{M} mindestens 20 mm, insbesondere mindestens 25 mm, insbesondere mindestens 30 mm.

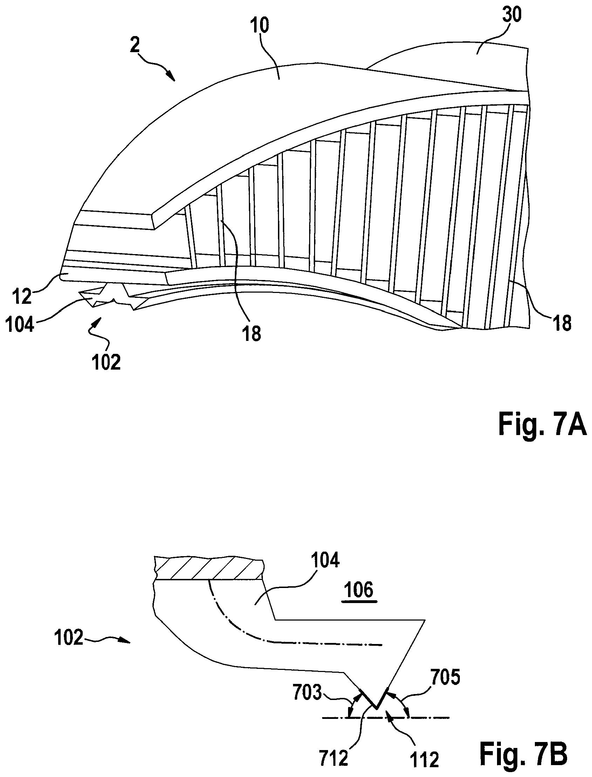

Figur 7A zeigt eine weitere Ausführungsform einer Scheibenwischvorrichtung 2, z.B. einer Finray-Struktur, bzw. eine weitere Ausführungsform einer Wischlippe 102. Die Scheibenwischvorrichtung 2 beinhaltet einen Oberteil 10 und ein Unterteil 12, die mit Verbindungselementen 18 verbunden sind. Diese sind typischerweise zumindest am Unterteil 12 gelenkig verbunden, so dass eine Bewegung nach dem Finray-Prinzip zur Verfügung gestellt werden kann. Das Oberteil 10 und das Unterteil 12 sind an einer Verbindungsposition, in Figur 7A vorne, verbunden. Ferner ist das Oberteil 10 und das Unterteil 12 an einem Anschlussstück 30 angebracht bzw. einteilig mit diesem ausgebildet. Das Anschlussstück 30 dient zur Befestigung an einer Rotationsachse zum Wischen der Scheibe bzw. zur Befestigung an einem Wischhebel. An der Unterseite des Unterteils 12 sind zwei Biegebalken 104 zur Verfügung gestellt. Einer der Biegebalken 104 ist vergrößert in Figur 7B dargestellt. Gemäß einigen hier beschriebenen Ausführungsformen, die mit anderen Ausführungsformen kombiniert werden können, sind die Biegebalken aus einem elastischen oder gummiartigen Material zur Verfügung gestellt, das dem Material der Wischkante 112 entspricht. Im Allgemeinen kann der Biegebalken 104, wie er exemplarisch in den Figuren 7B dargestellt ist, aus einem anderen Material bestehen als zumindest das Unterteil 12. Der Biegebalken kann aus einem Material mit einem Elastizitätsmodul von 1 MPa bis 100 MPa zur Verfügung gestellt werden.

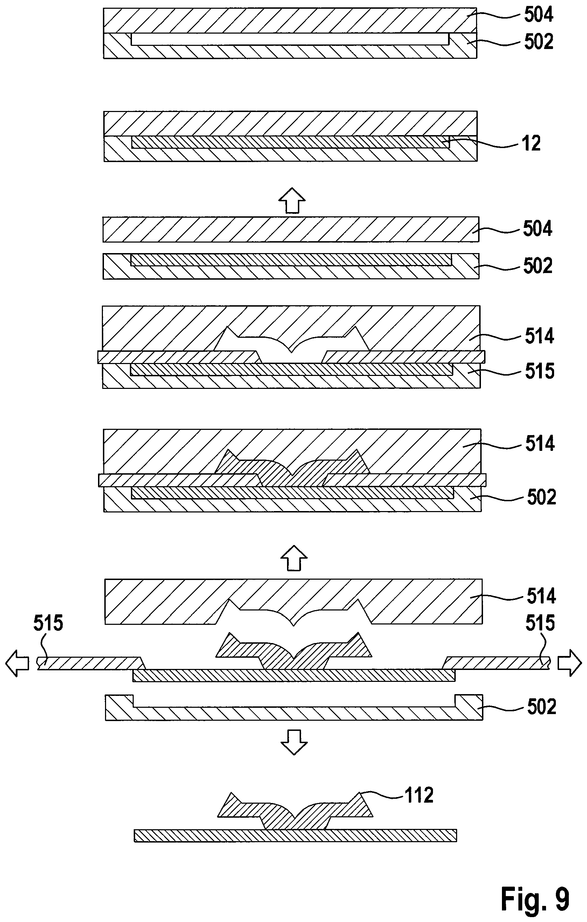

Ausführungsformen, bei denen der Biegebalken 104 aus einem anderen Material als das Unterteil 12 besteht, können z.B. durch eines der folgenden Verfahren zur Verfügung gestellt werden. Der Biegebalken 104 kann als extrudiertes Teil hergestellt werden, das an das Unterteil geklebt wird oder in das Unterteil ein gespritzt wird. Ferner kann der Biegebalken 104 mit einem Klettverschluss an dem Unterteil 12 zur Verfügung gestellt werden. Andere lösbar-verbindbare Verbindungsmöglichkeiten sind ebenfalls möglich. Hierdurch kann der Biegebalken als Ersatzteil leicht aufbringbar sein. Weiterhin kann der Biegebalken in einem 2-Komponenten Spritzverfahren hergestellt werden. Dies ist z.B. in Figur 9 beschrieben.

Die Wischlippe 102, wie Sie in Figur 7B dargestellt ist, beinhaltet den Biegebalken 104 und die Wischkante 112. Hierbei ist der Biegebalken ausgehend von seiner Grundfläche, an der er mit dem Unterteil 12 der Scheibenwischvorrichtung 2 verbunden ist bzw. verbindbar ist, als ein Arm ausgebildet, der sich entlang des Spalte 106 erstreckt. Die Wischkante 112 ist an dem Arm, zum Beispiel in Form eines Keilwinkels, zur Verfügung gestellt. Hierbei wird ein Winkel 703 bzw. ein Winkel 705 auf den beiden Seiten des Keilwinkels 712 zur Verfügung gestellt.

Gemäß typischen Ausführungsformen der Wischlippe, welche mit anderen Ausführungsformen kombiniert werden können, umfasst die Wischkante 23 einen Winkel α von 60° bis 120°, insbesondere 90°. Dadurch wird eine Wischlippe mit guter Dichtungswirkung zwischen Wischlippe und Scheibe und hoher Wischqualität bereitgestellt.

Gemäß typischen Ausführungsformen, die mit anderen hier beschriebenen Ausführungsformen kombiniert werden können, ist der Winkel 703 und der Winkel 705 gleich. Ferner sollten die Winkel auch in unterschiedlichen Betriebszuständen möglichst gleich groß bleiben, um eine möglichst gleichmäßige Wischqualität zu ermöglichen. Maßnahmen zur Reduzierung von möglichen Winkeländerungen werden in weiteren Ausführungsformen beschrieben.

Gemäß typischen Ausführungsformen der Wischlippe, welche mit anderen Ausführungsformen kombiniert werden können, kann die Wischlippe bzw. die Wischkante aus einem oder mehreren Materialen aus einer Gruppe bestehend aus: TPE (Thermoplastischem Elastomer), beispielsweise TPE-S, TPE-O, TPE-U, TPE-A, TPE-V, TPE-E; Ethylen-Propylen-Dien-Kautschuk (EPDM); Polychloropren und Naturkautschuk hergestellt sein.

Die Wischlippe 102, die in den Figuren bzw. der Biegebalken 104 kann der Unterseite des Unterteils 12 zur Verfügung gestellt sein. Hierzu kann z.B. eine Verankerung zu der Unterseite der Finray-Struktur existieren. Ferner beinhaltet der Biegebalken den Arm, der sich entlang des Spalts 106 erstreckt. Ein Keilwinkels 712 bildet den Schreiben-Kontaktbereich. Um eine gute Reinigungswirkung einer Scheibe eines Kraftfahrzeugs zu erreichen, muss eine gewisse Flächenpressung der Wischkante 112 auf die Scheibe erzielt werden. In Abhängigkeit von dem gewählten Elastizitätsmodul des Materials des Keilwinkels 712 kann der Winkel bzw. die Winkel des Keilwinkels angepasst werden. Je steifer das Material des Keilwinkels 712 ist, desto geringer kann der Winkel des Keilwinkels gewählt werden. Der Keilwinkel kann mit einem Elastizitätsmodul von 1 MPa bis 100 MPa zur Verfügung gestellt werden, wobei eine Abhängigkeit zwischen Winkel und Elastizitätsmodul besteht.

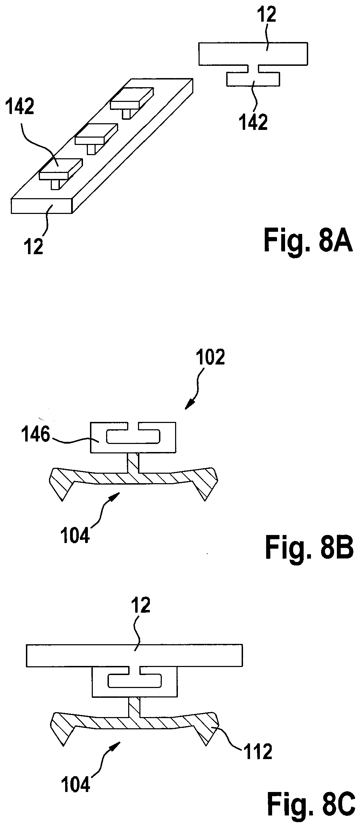

Weitere Ausführungsformen von Wischlippen und Scheibenwischvorrichtung, wie Sie insbesondere für Finray-Wischer verwendet werden können, sind in den Figuren 8A, 8B und 8C gezeigt. Hierbei werden Wischlippen 102 zur Verfügung gestellt, wobei die Wischlippen 102 an einem Unterteil 12 einer Scheibenwischvorrichtung durch einschieben, Klemmen, und oder Klipsen befestigt werden können. Dadurch kann eine Wischlippe 102 einfach an der Scheibenwischvorrichtung ausgewechselt werden. Es kann für den Handel eine Refill-Möglichkeit zur Verfügung gestellt werden.

Die Figuren 8A, 8B und 8C zeigen eine weitere Anschlussstruktur, wobei T-förmige Elemente 142 am Unterteil 12 der Scheibenwischvorrichtung zur Verfügung gestellt werden. Diese sind in Figur 8A segmentiert dargestellt, können sich gemäß anderen Ausführungsformen aber auch entlang der Längserstreckung der Scheibenwischvorrichtung ausdehnen. Die in Figur 8B dargestellte Wischlippe 102 beinhaltet den Biegebalken 104 mit der Wischkante sowie ein Befestigungselement 146. Ähnlich zu Figur 12 ist das Befestigungselement mit 2 U-förmigen Strukturen ausgebildet. Die U-förmigen Strukturen des Befestigungselements 146 umgreifen die T-förmigen Anschlussstücke 142 des Unterteils 12. Wie in Figur 14B dargestellt, kann der Biegebalken 104 und das Befestigungselement 146 aus unterschiedlichen Materialien bestehen. Zum Beispiel kann dies durch ein 2-Komponenten-Spritzverfahren hergestellt sein. Somit können die Materialeigenschaften des Biegebalkens 104 und Befestigungselement 146 unabhängig voneinander gewählt werden. Figur 8 C zeigt die Wischlippe 102 in einem an dem Unterteil 12 montierten Zustand.
Wie bereits erwähnt kann eine Wischlippe gemäß Ausführungsformen der vorliegenden Erfindung mit einem Unterteil einer Scheibenwischvorrichtung fest verbunden sein. Dies kann zum Beispiel durch kleben oder ein 2-Komponentenverfahren, zum Beispiel einen 2-Komponenten-Spritzverfahren, ermöglicht werden. Figur 9 zeigt schematisch entsprechende Abläufe für ein solches Spritzverfahren. Zunächst wird eine untere Spritzform 502 bzw. eine oberes Werkzeug und eine obere Spritzform 504 bzw. ein oberes Werkzeug aneinandergesetzt. Es bildet sich eine Kavität bzw. ein Hohlraum zum Spritzen des Unterteils. Das Unterteil 12 wird in dem Hohlraum, der sich zwischen der unteren Spritzform der oberen Spritzform ergibt, hergestellt. Zum Beispiel wird die Kavität mit Kunststoff gefüllt. Im Anschluss wird die obere Spritzform 504 bzw. obere Werkzeughälfte angehoben und entfernt. Eine zweite obere Spritzform 514 z.B. eine Profilkavität wird aufgesetzt, die eine den Biegebalken 104 korrespondierende Struktur hat. Ferner wird ein weiteres formgebendes Element bzw. Spritzwerkzeuge 515 verwendet, das den Spalt zwischen dem Unterteil 12 und den Biegebalken 104 definiert. Durch Spritzen von Kunststoff in sich daraus ergebende Kavität können die Biegebalken 104 hergestellt werden.

Durch geeignete Bearbeitung der zweiten oberen Spritz von 514 im Bereich der Wischkante, zum Beispiel durch ein Schleifen der Spritzform, wobei ein Kantenradius von R=0,1 mm oder weniger (bzw. R=0,05mm oder weniger) zur Verfügung gestellt wird, können die Biegebalken mit einer Wischkante im Spritzgussverfahren hergestellt werden, ohne dass die Wischkante später nachbearbeitet werden muss.

Nachdem die untere Spritzform 502, die zweite obere Spritzform 514, sowie das weitere Spritzwerkzeuge 515 entfernt worden ist, d.h. das Werkzeug geöffnet worden ist, ergibt sich eine Struktur aus einem Unterteil 12 und Biegebalken 104 mit Wischkanten 112 gemäß Ausführungsformen der vorliegenden Erfindung. Dafür das Füllen der ersten Kavität und das Füllen der zweiten Profilkavität unterschiedliche Materialien verwendet werden könne, kann ein 2-Komponentenprofil gespritzt werden.

Ausführungsformen der vorliegenden Erfindung stellen Wischlippen zur Verfügung, die ein umklappen in den Wendelagen einer Scheibenwischvorrichtung reduzieren bzw. verhindern. Gemäß typischen Ausführungsformen wird hierbei die Steifigkeit senkrecht zur Wischrichtung reduziert. Die Steifigkeit in Wischrichtung kann z.B. höher sein als die Steifigkeit senkrecht zur Wischrichtung. Einige der hier beschriebenen Ausführungsformen stellen hierfür Biegebalken 104 zur Verfügung, der auch als Monoprofil beschrieben werden kann. Die Steifigkeit wird durch einen Spalt oder einen Hohlraum, der von zumindest einem Biegebalken gebildet wird beeinflusst. Die Biegebalken haben typischerweise eine Struktur, so dass sich ein Spalt oder Hohlraum zwischen den Biegebalken und einem Unterteil einer Scheibenwischvorrichtung ausbildet, wobei der Spalt oder Hohlraum an einer Position angeordnet ist, die zwischen dem Biegebalken und dem Unterteil entlang einer Richtung senkrecht zur Wischrichtung an einer Position der Wischkante ist.
Daher kann gemäß Ausführungsformen der vorliegenden Erfindung eine Wischlippe bzw. eine Scheibenwischvorrichtung zur Verfügung gestellt werden die einen besseren Kontakt bzw. eine bessere Dichtung mit der Scheibe zur Verfügung gestellt, insbesondere wobei ein Umklappen reduziert oder verhindert werden kann. Es ist ferner möglich das Risiko einer Kollision zwischen Wischarms Struktur, zum Beispiel dem Unterteil 12, der Scheibe zu reduzieren, zum Beispiel durch ein entgegengesetztes Torsionsmoment sowie eine Stopper bzw. Anschlag zwischen Wischlippe und Unterseite des Wischarms. Der Kontaktpunkt bzw. der dominierende Kontaktpunkt der Scheibenwischvorrichtung mit der Scheibe ist in Wischrichtung nicht hinter dem Mittelpunkt des Wischarms oder einem Trägerelement des Wischarms, wodurch die Torsion erhöht wird. Sondern der Kontaktpunkt bzw. der dominierende Kontaktpunkt der Scheibenwischvorrichtung mit der Scheibe ist in Wischrichtung nach vorne verschoben bzw. liegt in Wischrichtung vor der Mitte eines Trägerelements, wie zum Beispiel dem Unterteil 12, wodurch die Torsion reduziert wird.

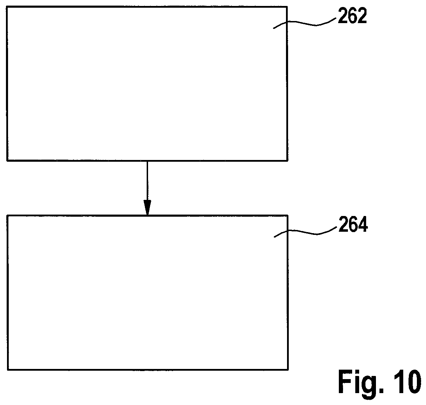

Figur 10 illustriert mit einem Ablaufdiagramm mehrere Verfahren zum Bereitstellen einer Wischkante an einer Scheibenwischvorrichtung, insbesondere einem Finray-Wischer. Wie in den oben beschriebenen Ausführungsformen beschrieben ist, kann eine Wischlippe, ein Biegebalken oder eine Wischkante getrennt von der Scheibenwischvorrichtung hergestellt werden. Hierbei können Ersatzteile mit geringem Materialaufwand zur Verfügung gestellt werden. Daher ist für die hier beschriebenen Ausführungsformen möglich besondere Verfahren zum Bereitstellen oder Wechseln einer Wischkante einer Wischlippe für einen Scheibenwischer für ein Kraftfahrzeug zur ermöglichen. In einem Schritt 262 wird eine Wischlippe, ein Biegebalken oder eine Wischkante hergestellt oder zur Verfügung gestellt. In Schritt 264 wird die Wischlippe, der Biegebalken oder die Wischkante montiert. Dies kann zum Beispiel durch aufschieben, aufklemmen, aufstecken, oder anklipsen geschehen.

## Patentansprüche

1. Scheibenwischvorrichtung für ein Fahrzeug, insbesondere ein Kraftfahrzeug, mit einem Wischblatt (2) und einer Wischlippe (102), mit einem langgestreckten Oberteil (10), das zumindest teilweise biegbar ausgestaltet ist, einem langgestreckten Unterteil (12), das zumindest teilweise biegbar ausgestaltet ist, mehreren Verbindungselemente (18) zum Verbinden des Oberteils (10) und des Unterteils (12), wobei die Verbindungselemente (18) entlang einer Längserstreckung (8) des Wischblatts (2) voneinander beabstandet sind, und wobei die Verbindungselemente (18) ausgelegt sind, um eine Bewegung des Oberteils (10) und des Unterteils relativ zu einander mit einer Bewegungskomponente entlang einer Längserstreckung (8) des Wischblatts (2) zu ermöglichen, **dadurch gekennzeichnet dass** die Wischlippe die folgende Merkmale umfasst :
- einen Biegebalken (104) zur Reduzierung der Steifigkeit senkrecht zur Wischrichtung, insbesondere einen Biegebalken mit einer Wischkante (112) und einer der Wischkante senkrecht zur Wischrichtung gegenüberliegenden Fläche des Biegebalkens, wobei angrenzend an die gegenüberliegende Fläche ein Spalt oder ein Hohlraum ist;
- eine Grundfläche (206) mit der der Biegebalken an dem Unterteil (12) verbunden ist; und
- einen weiteren Biegebalken (104) zur Reduzierung der Steifigkeit senkrecht zur Wischrichtung, wobei der weitere Biegebalken an der Grundfläche (206) an dem Unterteil (12) verbunden ist
- wobei der Biegebalken (104) der Wischlippe und der weitere Biegebalken (104) eine im Wesentlichen T-förmige Struktur ausbilden.

2. Scheibenwischvorrichtung nach Anspruch 1, wobei sich der Biegebalken (104) der Wischlippe und der weitere Biegebalken (104) ausgehend von der Grundfläche (206) jeweils in eine Richtung parallel zur Wischrichtung und in einer entgegengesetzten Richtung erstrecken, insbesondere wobei die Grundfläche eine Grundfläche im Wesentlichen in der Mitte angeordnet ist.

3. Scheibenwischvorrichtung nach einem der Ansprüche 1 bis 2, wobei die Wischkante (112) der Wischlippe in dem Biegebalken (104) integriert ist, insbesondere wobei die Wischkante und der Biegebalken aus demselben Material bestehen, und wobei eine weitere Wischkante (112) in dem weiteren Biegebalken (104) integriert ist, insbesondere wobei die weitere Wischkante und der weitere Biegebalken aus demselben Material bestehen.

4. Scheibenwischvorrichtung nach Anspruch 3, wobei die Grundfläche (206) der Wischlippe in einem Querschnitt senkrecht zur Längserstreckung der Wischlippe zwischen der Wischkante und der weiteren Wischkante angeordnet ist.

5. Scheibenwischvorrichtung nach einem der Ansprüche 1 bis 2, wobei die Wischkante (112) der Wischlippe an dem Biegebalken (104) montiert ist oder auf den Biegebalken beschichtet ist, insbesondere wobei die Wischkante und der Biegebalken unterschiedliche Materialien umfassen, und wobei eine weitere Wischkante (112) an dem weiteren Biegebalken (104) montiert ist oder auf den Biegebalken beschichtet ist, insbesondere wobei die weitere Wischkante und der weitere Biegebalken unterschiedliche Materialien umfassen.

6. Scheibenwischvorrichtung nach Anspruch 5, wobei die Grundfläche (206) der Wischlippe in einem Querschnitt senkrecht zur Längserstreckung der Wischlippe zwischen der Wischkante und der weiteren Wischkante angeordnet ist.

7. Scheibenwischvorrichtung nach einem der Ansprüche 1 bis 4, wobei die Wischkante (112) der Wischlippe einen Winkel von 60° bis 120°, insbesondere 90°, umfasst.

8. Scheibenwischvorrichtung nach einem der Ansprüche 1 bis 7, wobei die Wischkante der Wischlippe aus einem Material aus der Gruppe bestehend aus: TPE (Thermoplastischem Elastomer), insbesondere TPE-S, TPE-O, TPE-U, TPE-A, TPE-V, TPE-E; Ethylen-Propylen-Dien-Kautschuk (EPDM); Polychloropren und Naturkautschuk ist.

## Claims

1. Window wiper device for a vehicle, in particular a motor vehicle, with a wiper blade (2) and a wiper lip (102), with an elongate upper part (10), which is at least partially of flexible form, with an elongate lower part (12), which is at least partially of flexible form, and with multiple connecting elements (18) for connecting the upper part (10) and the lower part (12), wherein the connecting elements (18) are spaced apart from one another along a longitudinal extent (8) of the wiper blade (2), and wherein the connecting elements (18) are designed to permit a movement of the upper part (10) and of the lower part relative to one another with a movement component along a longitudinal extent (8) of the wiper blade (2), **characterized in that** the wiper lip comprises the following features:
- a cantilever (104) for reducing the stiffness perpendicular to the wiping direction, in particular a cantilever with a wiper edge (112) and with a surface, situated opposite the wiper edge perpendicularly to the wiping direction, of the cantilever, wherein the opposite surface is adjoined by a gap or a hollow space;
- a base surface (206) by which the cantilever is connected to the lower part (12); and
- a further cantilever (104) for reducing the stiffness perpendicular to the wiping direction, wherein the further cantilever is connected at the base surface (206) to the lower part (12),
- wherein the cantilever (104) of the wiper lip and the further cantilever (104) form a substantially T-shaped structure.

2. Window wiper device according to Claim 1, wherein the cantilever (104) of the wiper lip and the further cantilever (104) extend, proceeding from the base surface (206), in each case in a direction parallel to the wiping direction and in an opposite direction, wherein in particular, the base surface is a base surface arranged substantially in the middle.

3. Window wiper device according to either of Claims 1 and 2, wherein the wiper edge (112) of the wiper lip is integrated in the cantilever (104), wherein in particular, the wiper edge and the cantilever are composed of the same material, and wherein a further wiper edge (112) is integrated in the further cantilever (104), wherein in particular, the further wiper edge and the further cantilever are composed of the same material.

4. Window wiper device according to Claim 3, wherein the base surface (206) of the wiper lip is, in a cross section perpendicular to the longitudinal extent of the wiper lip, arranged between the wiper edge and the further wiper edge.

5. Window wiper device according to either of Claims 1 and 2, wherein the wiper edge (112) of the wiper lip is mounted on the cantilever (104) or is applied as a coating to the cantilever, wherein in particular, the wiper edge and the cantilever comprise different materials, and wherein a further wiper edge (112) is mounted on the further cantilever (104) or is applied as a coating to the cantilever, wherein in particular, the further wiper edge and the further cantilever comprise different materials.

6. Window wiper device according to Claim 5, wherein the base surface (206) of the wiper lip is, in a cross section perpendicular to the longitudinal extent of the wiper lip, arranged between the wiper edge and the further wiper edge.

7. Window wiper device according to any of Claims 1 to 4, wherein the wiper edge (112) of the wiper lip comprises an angle of 60° to 120°, in particular 90°.

8. Window wiper device according to any of Claims 1 to 7, wherein the wiper edge of the wiper lip is composed of a material from the group comprising: TPE (thermoplastic elastomer), in particular TPE-S, TPE-O, TPE-U, TPE-A, TPE-V, TPE-E; ethylene propylene diene monomer (EPDM); polychloroprene and natural rubber.

## Revendications

1. Dispositif d'essuie-glace pour un véhicule, en particulier un véhicule automobile, comprenant un balai d'essuie-glace (2) et une lèvre d'essuyage (102), comportant une partie supérieure allongée (10) qui est conçue de manière au moins partiellement flexible, une partie inférieure allongée (12) qui est conçue de manière au moins partiellement flexible, plusieurs éléments de liaison (18) destinés à relier la partie supérieure (10) et la partie inférieure (12), les éléments de liaison (18) étant espacés les uns des autres le long d'une direction longitudinale (8) du balai d'essuie-glace (2), et les éléments de liaison (18) étant conçus pour permettre un déplacement de la partie supérieure (10) et de la partie inférieure l'une par rapport à l'autre avec une composante de déplacement le long d'une direction longitudinale (8) du balai d'essuie-glace (2), **caractérisé en ce que** la lèvre d'essuyage comporte les caractéristiques suivantes :
- une barre flexible (104) servant à réduire la rigidité perpendiculairement à la direction d'essuyage, en particulier une barre flexible dotée d'une arête d'essuyage (112) et d'une surface, opposée à l'arête d'essuyage perpendiculairement à la direction d'essuyage, de la barre flexible, un interstice ou une cavité étant adjacent(e) à la surface opposée ;
- une surface de base (206) par laquelle la barre flexible est reliée à la partie inférieure (12) ; et
- une autre barre flexible (104) servant à réduire la rigidité perpendiculairement à la direction d'essuyage, l'autre barre flexible étant reliée à la partie inférieure (12) au niveau de la surface de base (206) ;
- la barre flexible (104) de la lèvre d'essuyage et l'autre barre flexible (104) formant une structure sensiblement en forme de T.

2. Dispositif d'essuie-glace selon la revendication 1, dans lequel la barre flexible (104) de la lèvre d'essuyage et l'autre barre flexible (104) s'étendent à partir de la surface de base (206) respectivement dans un sens parallèle à la direction d'essuyage et dans un sens opposé, la surface de base étant en particulier une surface de base disposée sensiblement au milieu.

3. Dispositif d'essuie-glace selon la revendication 1 ou 2, dans lequel l'arête d'essuyage (112) de la lèvre d'essuyage est intégrée dans la barre flexible (104), dans lequel l'arête d'essuyage et la barre flexible sont en particulier constituées du même matériau, et dans lequel une autre arête d'essuyage (112) est intégrée dans l'autre barre flexible (104), dans lequel l'autre arête d'essuyage et l'autre barre flexible sont en particulier constituées du même matériau.

4. Dispositif d'essuie-glace selon la revendication 3, dans lequel la surface de base (206) de la lèvre d'essuyage est disposée entre l'arête d'essuyage et l'autre arête d'essuyage dans une section transversale perpendiculaire à la direction longitudinale de la lèvre d'essuyage.

5. Dispositif d'essuie-glace selon la revendication 1 ou 2, dans lequel l'arête d'essuyage (112) de la lèvre d'essuyage est montée sur la barre flexible (104) ou est appliquée en tant que revêtement sur la barre flexible, dans lequel l'arête d'essuyage et la barre flexible comportent en particulier des matériaux différents, et dans lequel une autre arête d'essuyage (112) est montée sur l'autre barre flexible (104) ou est appliquée en tant que revêtement sur la barre flexible, dans lequel l'autre arête d'essuyage et l'autre barre flexible comportent en particulier des matériaux différents.

6. Dispositif d'essuie-glace selon la revendication 5, dans lequel la surface de base (206) de la lèvre d'essuyage est disposée entre l'arête d'essuyage et l'autre arête d'essuyage dans une section transversale perpendiculaire à la direction longitudinale de la lèvre d'essuyage.

7. Dispositif d'essuie-glace selon l'une quelconque des revendications 1 à 4, dans lequel l'arête d'essuyage (112) de la lèvre d'essuyage présente un angle de 60° à 120°, en particulier de 90°.

8. Dispositif d'essuie-glace selon l'une quelconque des revendications 1 à 7, dans lequel l'arête d'essuyage de la lèvre d'essuyage est constituée d'un matériau du groupe consistant en : du TPE (élastomère thermoplastique), en particulier du TPE-S, du TPE-O, du TPE-U, du TPE-A, du TPE-V, du TPE-E ; du caoutchouc éthylène-propylène-diène (EPDM) ; du polychloroprène et du caoutchouc naturel.
